# EUROPEAN PATENT APPLICATION

(11) **EP 4 804 542 A1**
(43) Date of publication of application: **09.09.2026**
(21) Application number: 25305279.9
(22) Date of filing: 03.03.2025
(51) Int. Cl.: H04N 21/81

(54) **AVATAR PLENOXEL MODEL SIGNALING**

(71) Applicant: InterDigital CE Patent Holdings, SAS, 75017 Paris (FR)
(72) Inventor: LE CLERC, Francois, 35590 L'HERMITAGE (FR); GOSSELIN, Philippe Henri, 35235 THORIGNE-FOUILLARD (FR); COVA REGATEIRO, João Pedro, 35220 CHATEAUBOURG (FR); AVRIL, Quentin, 35830 BETTON (FR)
(74) Representative: Vossius & Partner Patentanwälte Rechtsanwälte mbB

(57) **Abstract**

Some embodiments of a method may include: obtaining information corresponding to a Plenoxel representation of an avatar; populating a data structure using the information corresponding to the Plenoxel representation of the avatar; and communicating the data structure to a receiving device, wherein the data structure comprises a PlenoxelData object, and wherein the PlenoxelData object provides a description of the Plenoxel representation of the avatar.

## Description

### INCORPORATION BY REFERENCE

The present application incorporates by reference in their entirety the following applications: European Patent Application Serial No. EP23306725, entitled "AVATAR CANONICAL POSE IN SCENE DESCRIPTIONS" and filed October 6, 2023 ("'725 application"); International Patent Application Serial No. PCT/EP2024/078036, entitled "AVATAR CANONICAL POSE IN SCENE DESCRIPTIONS" and filed October 4, 2024 ("'036 application"); European Patent Application Serial No. EP24305094, entitled "AVATAR JSON INTERCHANGE FILE FORMAT" and filed January 15, 2024 ("'094 application"); and International Patent Application Serial No. PCT/EP2024/078214, entitled "AVATAR JSON INTERCHANGE FILE FORMAT" and filed October 8, 2024 ("'214 application").

### BACKGROUND

The present application is related to avatars in 3D virtual environments.

### SUMMARY

An example method in accordance with some embodiments may include: obtaining information corresponding to a Plenoxel representation of an avatar; populating a data structure using the information corresponding to the Plenoxel representation of the avatar; and communicating the data structure to a receiving device, wherein the data structure includes a PlenoxelData object, and wherein the PlenoxelData object provides a description of the Plenoxel representation of the avatar.

Some embodiments of the example method may further include parsing the information corresponding to the Plenoxel representation of the avatar.

For some embodiments of the example method, the PlenoxelData object includes properties of the avatar.

For some embodiments of the example method, the PlenoxelData object includes pose data, grid geometry data, and vertices data of the avatar.

For some embodiments of the example method, populating the data structure includes populating the PlenoxelData object.

For some embodiments of the example method, populating the PlenoxelData object includes: populating an avatarPose property of the PlenoxelData object; populating a gridGeometry property of the PlenoxelData object; and populating a vertices property of the PlenoxelData object.

For some embodiments of the example method, the grid geometry data includes bounding box data, number of vertices data, and grid rotation data corresponding to the avatar.

For some embodiments of the example method, the bounding box data includes data indicating a center and a size of the bounding box data.

For some embodiments of the example method, the bounding box data includes data indicating a 3D bounding volume of the avatar.

For some embodiments of the example method, the grid rotation data indicates a 3D rotation used to define a 3D bounding volume of the avatar.

For some embodiments of the example method, the vertices data includes data indicating density and spherical harmonic coefficients associated with the avatar.

For some embodiments of the example method, the pose data indicates a Uniform Resource Name (URN) associated with a pose of the avatar.

For some embodiments of the example method, the data structure includes data mapping between child nodes of the avatar and avatar body parts.

For some embodiments of the example method, the data structure complies with an MPEG-I SD-based standard.

An example apparatus in accordance with some embodiments may include: a processor; and a memory storing instructions operative, when executed by the processor, to cause the apparatus to perform any of the methods listed above.

### BRIEF DESCRIPTION OF THE DRAWINGS

The following detailed description will be better understood when read in conjunction with the appended drawings, in which there are shown examples of one or more of the multiple embodiments of the present application. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a schematic illustration showing example levels of detail for example avatar mesh models.
FIG. 3 is a schematic illustration showing an example Plenoxel 3D voxel grid according to some embodiments.
FIG. 4 is a schematic illustration showing an example cuboid-shaped voxel according to some embodiments.
FIG. 5 is a schematic illustration showing an example synthesis of a novel view of an avatar according to some embodiments.
FIG. 6 is a flowchart illustrating an example process for parsing a "PlenoxelData" object according to some embodiments.
FIG. 7 is a flowchart illustrating an example process for obtaining an image of the avatar from a prescribed viewpoint according to some embodiments.
FIG. 8 is a flowchart illustrating an example process for generating an image of an avatar using Plenoxel data according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present application, certain terminology is used herein for convenience only and should not be considered as limiting such embodiments. In the drawings, the same reference numerals are employed for designating the same elements throughout the several figures and the present description.

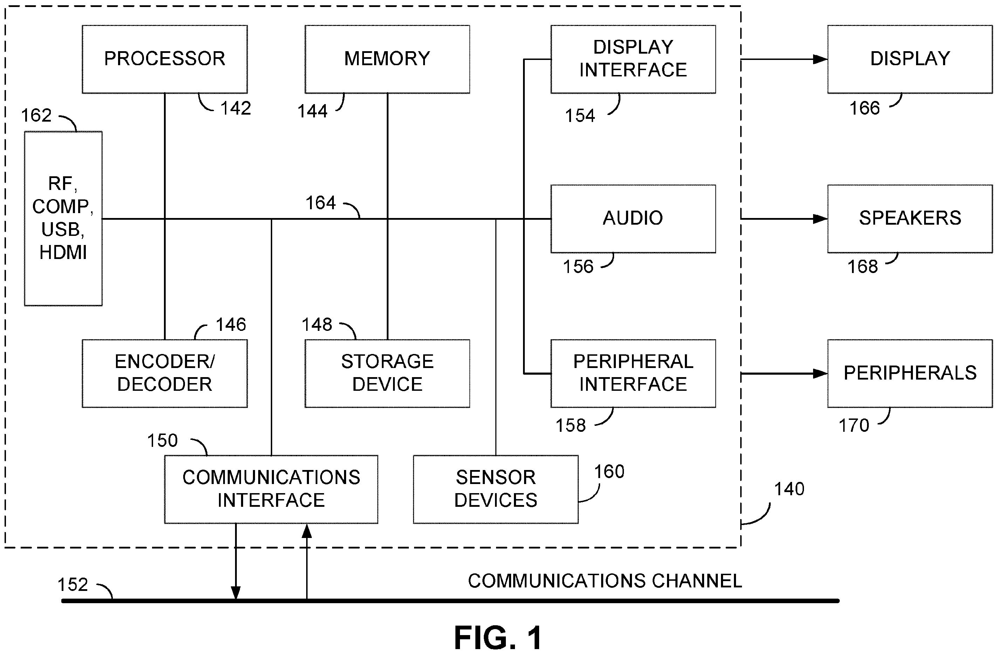

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any eXtended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application discusses the representation of avatars in 3D virtual environments. Such representations are used, for instance, in "metaverse" frameworks, in which avatars act as proxy representations for users. They allow users to interact with other users represented by their own avatar and with real world elements through virtual representations of these elements.

The scenario described hereafter describes, for illustration purposes, an application involving an avatar in a metaverse framework. An e-commerce website may be represented inside a metaverse 3D virtual environment by a virtual shop in a virtual shopping street. A user may direct an avatar, for instance by using a game console or by pressing keys on a computer keyboard, to walk along the virtual shopping street in the virtual environment and enter the virtual shop. The virtual shop is a computer-generated representation of a store owned by some retail company. The display on the user's computer screen is updated live to reflect the position and viewpoint of the avatar in the virtual environment. When the avatar enters the virtual shop, the user is shown the virtual representation of the shop. The user may navigate his or her avatar through the aisles of the virtual shop and select goods that the user wants to buy. These goods are virtual representations of real goods that are sold in brick-and-mortar shops owned by the retail company. When the avatar exits the virtual shop, its user is asked to pay for the goods selected in the virtual shop. The payment proceeds in the real world, for instance by means of the user's credit card. When the payment is acknowledged, the user gets the physical goods delivered to his or her home by the retail company. In this scenario, navigating in the 3D immersive environment through an avatar to buy goods may be seen as a novel immersive alternative to browsing an e-commerce website.

### Avatar Representation

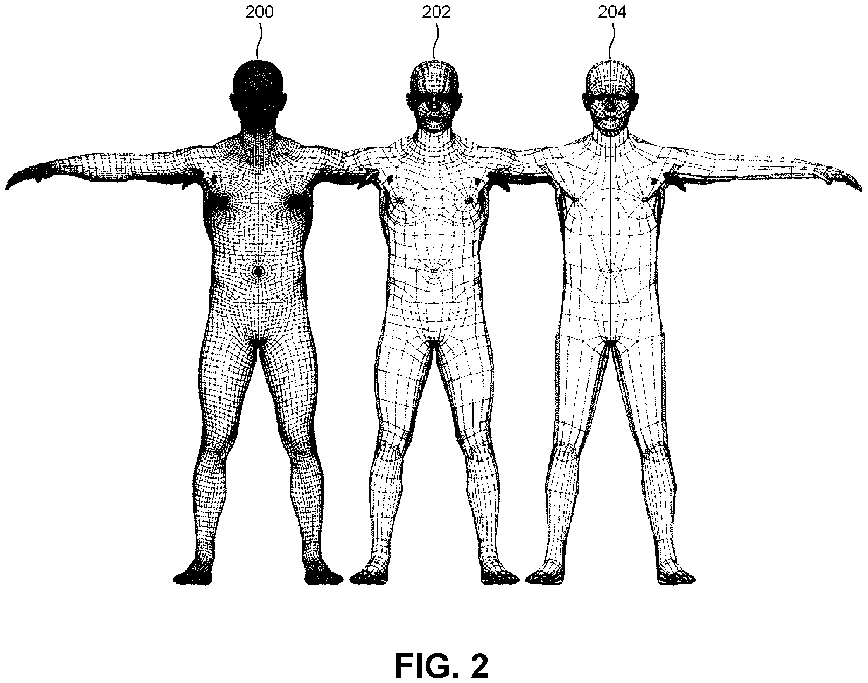

FIG. 2 is a schematic illustration showing example levels of detail for example avatar mesh models. An avatar in a 3D virtual environment is often represented as a 3D textured mesh. Example avatar mesh geometries are shown in FIG. 2. FIG. 2 shows topologies 200, 202, 204 of the avatar mesh reference models for the MPEG-I Scene Description standard, for various levels of detail (from left to right: high (200), medium (202), and small (204)). See *Annex H of ISO*/*IEC 23090-14 DAM2: Support for Haptics, Augmented Reality, Avatars, Interactivity, MPEG-I Audio, and Lighting.*

The mesh is defined by a set of 3D vertices connected by edges. The vertices and edges form polygonal faces that together make up the surface of the mesh. Often, the polygonal faces are triangles. The appearance of the avatar is represented by a texture that is applied to the faces of the mesh and defines the colors of the surface of the avatar body.

The body of a human character often has a smooth surface that may be modeled by a polygonal mesh. However, meshes are not appropriate for modeling fine-grained details of an avatar's appearance, such as hair, skin pores, and wrinkles. Indeed, a huge number of polygonal faces may be required to account for these fine scale geometry details. Besides, the mesh representation of a surface cannot account for transparency effects that are used to accurately model the interaction of light with translucent objects, such as hair strands.

Several advanced representations of textured 3D objects have been proposed in scientific literature to address the limitations of rendering quality for polygonal meshes. Among them is a Plenoxel representation, which is described in the paper Fridovich-Keil, S., et al, Plenoxels: Radiance Fields Without Neural Networks, PROCEEDINGS OF THE 2022 IEEE INTERNATIONAL CONF. ON COMP. VISION AND PATTERN RECOGNITION (CVPR) (2022)("*Fridovich-Keil"*)*.* A Plenoxel representation of an object is learnt from a set of images of the object captured at the same instant from different viewpoints using a multi-camera setup. The representation allows synthesis of an image of the object from a novel viewpoint. By specifying this viewpoint, the synthesized image may be composited in the rendering of a 3D virtual environment in such a way that the object is seamlessly inserted into the environment.

### Plenoxel Representation

A description of the Plenoxel representation and an example processing model are provided below. A Plenoxel representation of an object may be generated from a multi-view capture of a character under different viewpoints using a setup of cameras. The cameras are synchronized to capture the object at the same instant. The cameras are calibrated so that their relative positions and orientations in 3D space are known. As a result, all cameras and the object may be localized in a single reference 3D coordinate system. This single reference 3D coordinate system will be referred to as "world space" herein.

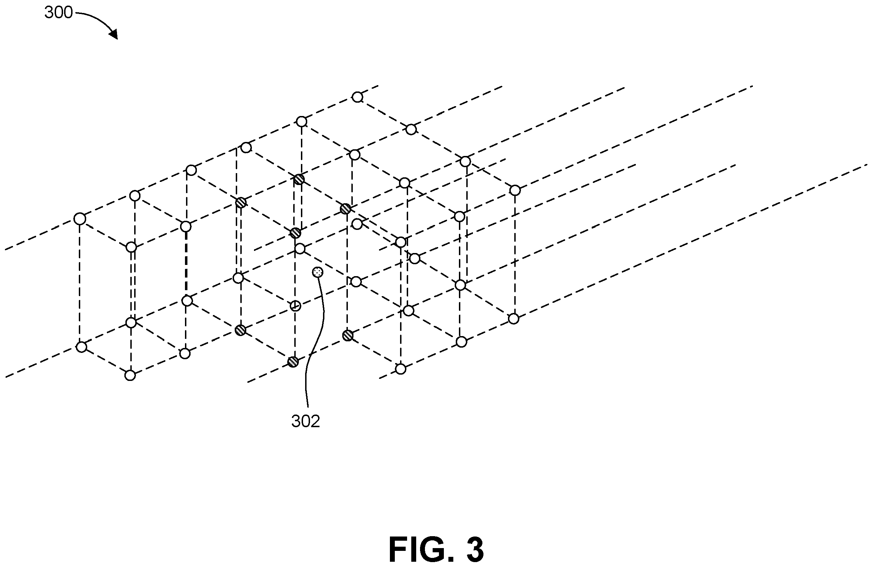

FIG. 3 is a schematic illustration showing an example Plenoxel 3D voxel grid according to some embodiments. A Plenoxel representation of the object includes a regular grid 300 of 3D points, as shown in FIG. 3. This grid typically encompasses a bounding volume of the object. Each 3D point inside the bounding volume of the grid, such as point 302 in FIG. 3, is located in a cuboid formed by its eight surrounding grid vertices. In FIG. 3, the eight vertices surrounding point 302 are represented with diagonal line pattern-filled dots, while the other grid vertices are represented with white/clear dots.

Each grid vertex represented as a thick solid dot is characterized by density and color features. The density and color feature values of any point in 3D space, such as point 302, which is represented by a thick circle, are tri-linearly interpolated from the corresponding feature values of the eight grid vertices that surround point 302.

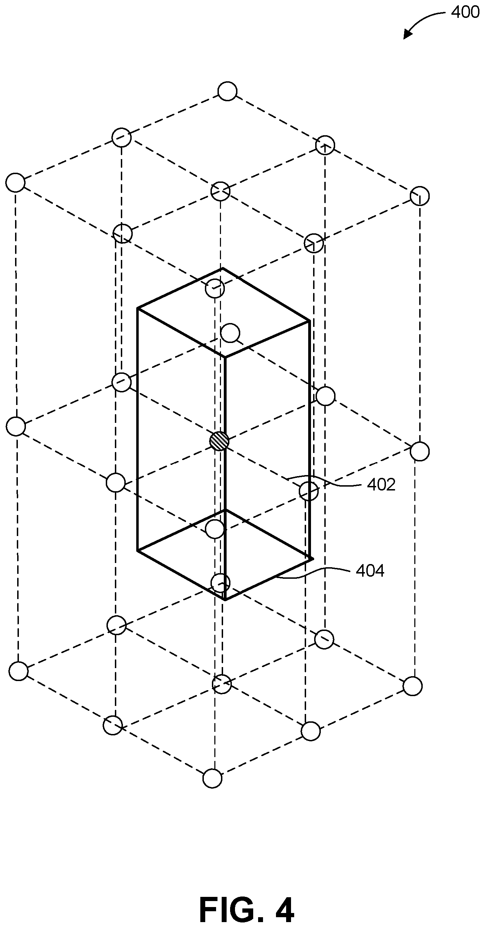

FIG. 4 is a schematic illustration showing an example cuboid-shaped voxel according to some embodiments. FIG. 4 shows a voxel 402 associated with a vertex 402 of a 3D Plenoxel grid 400. Each vertex of the 3D grid is the center of a cuboid voxel, or volume cell. FIG. 4 illustrates a cuboid-shaped voxel 404 centered on grid vertex 402 which is represented as a diagonal line pattern-filled dot, while other grid vertices are represented as white/clear dots. Each of these other vertices is itself the center of a cuboid voxel that has the same shape as voxel 404.

Each vertex of the Plenoxel grid, such as vertex 402 in FIG. 4, is characterized by occupancy and color data that describe the presence or absence of the object at the location of the vertex, as well as the color of the object at the vertex location. The occupancy data is a floating-point density value that provides information on the opacity of the object at the location of the vertex. If the object has an opaque body, as is often the case, the density value is 1.0 at points located on the surface of the object body and 0.0 at points located outside of the object body. The color information is represented as a set of spherical harmonics coefficients that model the color of the object at the location of the vertex. The spherical harmonics coefficients are multiplied by pre-determined corresponding spherical harmonics basis functions that depend on the spatial direction of the imaging ray that hits the vertex. The result of this multiplication is the color of the Plenoxel grid vertex.

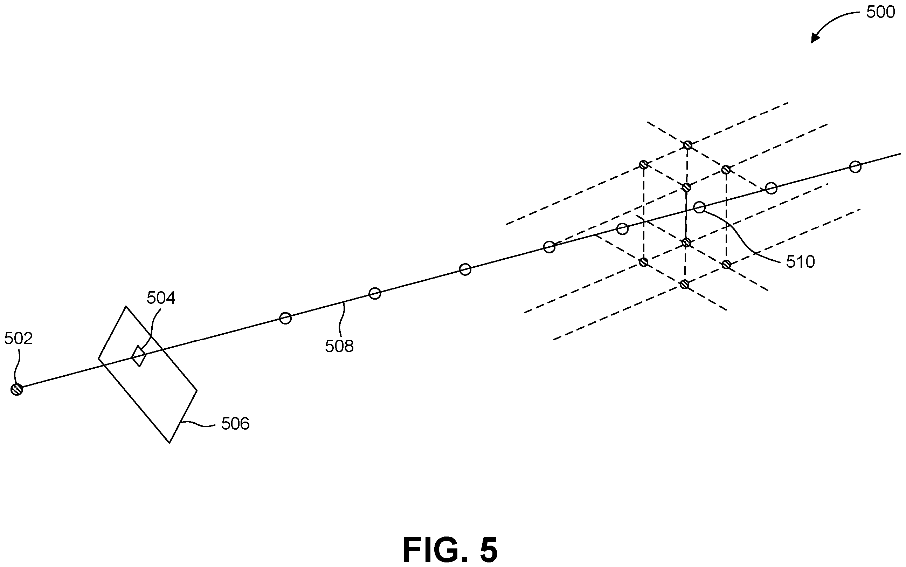

FIG. 5 is a schematic illustration showing an example synthesis of a novel view of an object according to some embodiments. Stated differently, FIG. 5 shows a model that may be used for computing the color of an image pixel and rendering the pixel from a Plenoxel voxel grid. The synthesis proceeds according to several steps.

The viewpoint is specified as a virtual camera with a given optical center 502, a viewing direction, and lens characteristics including the focal length. These parameters define, among other things, the position in the coordinate system of the virtual camera of each pixel of the image formed by the camera in its image plane 506.

For some embodiments, the color of each pixel of the synthesized image may be computed by the following steps. A ray 508 is cast from the optical center of the camera towards the position of the considered pixel 504 in the image plane 506. Points are sampled along this ray 508, within the union of view frustums of the cameras of the camera capture setup in world space.

At each point sampled on the ray, such as point 510, a density value and a set of Spherical Harmonics (SH) color coefficients are tri-linearly interpolated from the densities and SH color coefficients of the 8 vertices surrounding point 510 in the Plenoxel grid, as illustrated on FIG. 3. In FIG. 5, these eight vertices are represented as diagonal line pattern-filled dots. The dotted lines that connect these points represent edges of the Plenoxel grid.

The densities and SH color coefficients of the sampled points are accumulated along the ray 508 according to a volume rendering process known from the state-of-art. This volume rendering process is used to determine the color of the pixel 504 in the image plane 506 of the virtual camera that is hit by the ray 508.

### Avatar Representation in the MPEG-I Scene Description Standard

The standard *Khronos gITF Specification for the Efficient Transmission and Loading of 3D Scenes and Models by Engines and Applications,* K_{HRONOS}, Version 2.0, *available at* www<dot>khronos<dot>org/gltf/ provides specifications for standardizing the representation of the basic geometry, texture, and animation of an avatar.

The standard MPEG-I *Scene Description (MPEG-I SD),* Draft Text, ISO/IEC 23090-14 enriches glTF with extra features, including timed media. The document *Support for Haptics, Augmented Reality, Avatars, Interactivity,* MPEG-I *Audio, and Lighting,* Amendment 2 of MPEG-I Scene Description (SD), ISO/IEC 23090-14 CDAM2 (*"Amendment 2 of MPEG-I SD"*) defines a specialization of a glTF node for avatars through its "MPEG_node_avatar" extension. This extension adds avatar-specific semantic descriptive elements to the attributes provided by glTF for describing the geometry, texture, and animation of digital human characters. However, *Amendment 2 of MPEG-I SD* is understood to not support any description of an avatar relying on a Plenoxel representation.

### AJIF Avatar Representation

The Avatar JSON Interchange Format (AJIF), which is described in the '214 application, is an avatar description format that uses the structure shown in Table 1.

**Table 1.**

| **Name** | **Type** | **Description** | **Required** |
|---|---|---|---|
| data | RawData[1-*] | List of *RawData* | No |
| geometries | Geometry[1-*] | List of *Geometry* | No |
| nodes | Node[1-*] | List of *Node* | No |
| textures | Texture[1-*] | List of *Texture* | No |
| skeletons | Skeleton[1-*] | List of *Skeleton* | No |
| controllers | Controller[1-*] | List of *Controller* | No |
| lods | LOD[1-*] | List of *LOD* | No |
| metadata | Metadata | Metadata about the avatar | No |
| asset | Asset | Information about the file | Yes |

All the elements of the top-level AJIF structure, except "metadata" and "asset", are collections of *items* represented as lists. Each *item* may be referenced with its index in the list, in which the first index in each list is zero. One of those items in Table 1 is an LOD item.

An LOD item contains all the data for the avatar at a given level of detail, as described in Table 2.

**Table 2.**

| **Name** | **Type** | **Description** | **Required** |
|---|---|---|---|
| name | string | LOD name | No |
| lod | integer | Indicates the level of detail. Lower values correspond to higher levels of detail. | No, default 0 |
| mesh | integer | References a node in the *"nodes"* collection | No |
| skeletons | integer[1-*] | List of references to skeletons in the *"skeletons"* collection | No |
| controllers | integer[1-*] | List of references to controllers in the "controllers" collection | No |

In the metaverse-like frameworks that are described earlier, the descriptions of 3D environments, which may involve avatars, need to be transmitted between client and server devices. For instance, in multiuser applications, a server device may manage the description of a virtual 3D environment and of avatars navigating in this environment. The user avatar representations are controlled by the users on their client devices. Each user client device periodically sends an update of the position, pose, and appearance of his or her avatar to the server device. The server device updates the description of the scene representing the 3D virtual environment accordingly to reflect the new positions and postures of all avatars. The server device then transmits this description to each user device so that they may render the updated scene to the users.

In this context, a Plenoxel representation of the avatar may provide an effective means of transmitting a high-fidelity model of an avatar to the server. Based on the received description of the Plenoxel model, the server device may synthesize an image of the avatar under a desired viewpoint and then composite this image on a 3D rendering of the virtual world under a given viewpoint.

Since the Plenoxel representation of the avatar on the one hand, and the 3D virtual environment on the other hand, are defined in two different 3D coordinate systems, the server device may need to determine the rendering viewpoint of the avatar so that the synthesized avatar image is seamlessly composited onto the rendering of the virtual environment. This requirement means that the position, scale, and orientation of the avatar in its rendered image needs to be consistent with the content of the rendered image of the environment. To this end, a description of the avatar position and pose in the coordinate system in which its Plenoxel representation is defined needs to be transmitted to the server device, in addition to the description of the Plenoxel model.

The purpose of this application is to define a description of the Plenoxel model of an avatar and of the position and pose of the avatar in the coordinate frame of the Plenoxel model, from which a receiving device may synthesize an image of the avatar with a prescribed position, scale, and orientation, for composition into a rendering of the 3D environment computed by this device.

This application describes the geometry of the Plenoxel grid in 3D world space and the pose of the avatar in this geometry. For some embodiments, these elements are needed by the application that receives the description to map the avatar position and orientation in the Plenoxel frame to its own coordinate system.

This application describes a method for signaling a Plenoxel representation of an avatar, which is transmitted by a sender device to a receiver device. The transmitted representation allows the receiver device to synthesize an image of the avatar with a prescribed position, orientation, and scale of the avatar in the image.

To this end, the representation includes: (1) a description of the avatar position and orientation in the coordinate frame in which the Plenoxel representation is defined, and (2) a description of the Plenoxel representation of the avatar, in the form of a 3D grid of vertices, such as the grid represented in FIG. 3. Each grid vertex is described by a position in the grid and a set of features specifying its density and color.

### MPEG-I SD Description of a Plenoxel Avatar Model

The following detailed presentation of the plenoxel-based avatar model representation that is the object of the application is compliant with the MPEG-I Scene Description format, hereafter abbreviated as "MPEG-I SD", but its meaning and use is generic. The representation may be encoded in any other scene description format, such as XML or USD.

Table 3 describes the "PlenoxelModel" property, which has a data type of "PlenoxelData", and associated avatar type and mapping data. According to some embodiments, the "PlenoxelModel" property is added to the "MPEG_node_avatar" extension of the MPEG-I SD format to encode the Plenoxel model of an avatar. The MPEG-I SD "MPEG_node_avatar" extension is described in *Amendment 2 of MPEG-I SD.*

**Table 3.**

| **Name** | **Type** | **Description** | **Required** |
|---|---|---|---|
| type | string | Avatar representation format provided as a URN | Yes |
| mappings | Mapping[1-*] | The mapping between child nodes and avatar body part semantics | Yes |
| PlenoxelModel | PlenoxelData | Plenoxel avatar representation | No |

Table 4 describes the properties of the "PlenoxelData" MPEG-I SD data type.

**Table 4.**

| **Name** | **Type** | **Description** | **Required** |
|---|---|---|---|
| name | string | Name of the Plenoxel avatar model | No |
| avatarPose | CanonicalPose | Position and orientation of the avatar in the Plenoxel 3D coordinate frame | Yes |
| gridGeometry | Grid3D | Bounding volume of the Plenoxel grid the Plenoxel 3D coordinate frame | Yes |
| vertices | PlenoxelVertex[1-*] | Array of PlenoxelVertex instances describing the density and color features of the vertices in the Plenoxel 3D grid. | Yes |

The "name" property of the "PlenoxelData" data type is an optional string that labels the model.

The "avatarPose" property of the "PlenoxelData" data type describes the pose of the avatar in the 3D coordinate frame in which the Plenoxel representation of the avatar is defined. The pose of the avatar specifies the position of the avatar in this coordinate frame, *e.g*., which is the vertical coordinate of the horizontal plane on which the avatar feet rest, as well as the orientation of the avatar, *e.g*., what is the orientation of the axis perpendicular to the frontal plane of the avatar, as well as the scale of the avatar.

The "avatarPose" property may be specified as an instance of the "CanonicalPose" type, which is described in the '036 application. The "CanonicalPose" type specifies the pose of the avatar as a Uniform Resource Name (URN) in which the forward and bottom-up axes of the avatar are referenced with respect to the axes of the coordinate system in which the avatar is represented. For instance, the mpeg:sd:avatar:pose:xyz URN defined in the "CanonicalPose" specification points to the following textual description: "The forward axis is X. The bottom-up axis is Y. The right is Z. The feet plane is y=0."

The "gridGeometry" property of the "PlenoxelData" data type describes the geometry of the 3D grid of vertices in the 3D coordinate frame of the Plenoxel representation. The "gridGeometry" property is an instance of the "Grid3D" data type, which is defined in Table 5.

The "vertices" property of the "PlenoxelData" data type is a collection of instances of the "PlenoxelVertex" data type. The "PlenoxelVertex" data type is described in Table 7.

Table 5 provides a description of the "Grid3D" data type, which is used to describe the geometry of a 3D grid.

**Table 5.**

| **Name** | **Type** | **Required** | **Description** |
|---|---|---|---|
| box | BoundingBox | Yes | Axis-aligned 3D rectangular cuboid defining the smallest bounding volume for the 3D grid in *(X, Y, Z)* space. It is described as a "BoundingBox" object whose specification is provided in Table 6.. |
| numCells | integer[3] | Yes | Numbers of vertices *(nx, ny, nz)* of the 3D grid in the X, *Y* and Z directions. The 3D extent of this grid is defined by the "box" property. |
| gridRotation | number[4] | No | 3D rotation to be applied to the axis-aligned "box" to define the bounding volume of the 3D grid. The rotation is defined as a unit quaternion *(x, y, z, w).* |

The "box" and "gridRotation" properties specify the bounding volume of the 3D grid as a rectangular cuboid. The "box" property specifies an axis-aligned rectangular cuboid, which is an object of "BoundingBox" type and which is specified in Table 6.. The "gridRotation" property specifies an optional 3D rotation to be applied to the axis-aligned "box" to generate the bounding volume of the 3D grid of voxels. This rotation is specified as a unit quaternion *(x, y, z, w).*

The "numCells" property specifies the number of grid vertices along the *X*, *Y,* Z directions of the axis-aligned "box". The vertices located at the extremity of the grid are assumed to lie on the bounding volume defined by the "box" and "gridRotation" properties. Alternatively stated, the bounding volume is the smallest possible volume in which the 3D grid may be included. Hence, the distance between two consecutive vertices along one of the axes of the grid is equal to the spatial extent of the bounding volume of the grid along this axis, divided by the number of grid vertices along the axis minus 1.

Table 6 describes the elements of the "BoundingBox" data type. The "BoundingBox" data type describes an axis-aligned rectangular cuboid in a 3D coordinate frame. A "BoundingBox" object contains a "center" property, which specifies a center point. A "BoundingBox" object also contains a 3-dimensional "size" property, which describes the lengths of the rectangular cuboid along the *X, Y* and *Z* axes of the coordinate frame.

**Table 6.**

| **Name** | **Type** | **Required** | **Description** |
|---|---|---|---|
| center | number[3] | Yes | Coordinates of the center of the 3D rectangular cuboid defining the geometry of the bounding box. |
| size | number[3] | Yes | Dimensions along each 3D axis of the 3D rectangular cuboid defining the geometry of the bounding box. |

Table 7 describes the properties of the "PlenoxelVertex" data object.

**Table 7.**

| **Name** | **Type** | **Required** | **Description** |
|---|---|---|---|
| density | number | Yes | Density of the 3D avatar at the vertex position. This is a floating-point number in [0, 1]. |
| SHcoeffs | number[1-*] | Yes | Array of Spherical Harmonic (SH) coefficients for the verte. Each coefficient is a floating point VEC3 number representing the R, G, B components of the SH coefficient. |

The "PlenoxelVertex" type specifies properties of the feature data for each vertex of the Plenoxel grid. This data consists of a density and a viewpoint-dependent color.

The "density" property is a floating-point number in the [0,1] interval that specifies the volume density of the avatar at the considered vertex position. The volume density of a 3D point is defined according to the principles of the volume rendering method referenced in *Fridovich-Keil,* which describes the Plenoxel approach.

The "SHcoeffs" property specifies an array of Spherical Harmonics (SH) coefficients representing the viewpoint-dependent color of a vertex. This color is specified as a three-dimensional array of SH coefficients, where the three dimensions represent the R, G, B intensities of the color. SH coefficients provide a parameterization of the color of a point on the surface of a 3D sphere as a function of the two angles defining the viewing direction of the considered point along a ray whose origin is the center of the sphere.

This parameterization is expressed using a series decomposition on a discrete version of a predetermined set of SH basis functions. Each SH basis function maps the two angles defining a viewing direction in 3D space to a number. The decomposition of the function expressing the color of a vertex with respect to the two angles specifying the viewing direction is expressed as a sum of contributions at each order *l* of the SH basis functions up to a predetermined maximum order *lₘₐₓ.* The contribution at each order *l* is expressed as a weighted summation over an integer index *m* of SH coefficients *c_{l,m}* multiplied by the discrete value of the SH basis function *Y_{l,m}* for coefficient *m* and order *l*. At each order *l*, m varies from -*l* to *l*. Thus, there are *2l+1* terms, hence *2l+1* SH coefficients, in the weighted summation at order *l*. The array represented by the "SHcoeffs" property stores the SH coefficients *c_{l,m}* for each order *l* up to *Iₘₐₓ.* For instance, if *Iₘₐₓ* is set to 2, the "SHcoeffs" property will store 1 three-dimensional coefficient for order 0 followed by 3 coefficients for order 1 followed by 5 coefficients for order 2, for a total of 9 coefficients. Each such set of coefficients models a viewpoint-dependent component of the color, such as R, G, or B. Since a color is determined by 3 color components, 9 coefficients times 3 components are needed to represent an order 2 SH model for the color of a Plenoxel grid vertex.

For some embodiments of the MPEG-I SDrepresentation of a Plenoxel avatar model, the "vertices" property of the "PlenoxelData" type described in Table 4 is an integer defining the index in the "accessors" array of the MPEG-I SD scene description of an accessor pointing to a buffer that holds the density and color SH coefficient values for all the vertices in the Plenoxel grid. In order to encode the feature values of the three-dimensional grid of vertices to a one-dimensional buffer, the vertices may be ordered starting with the vertex with the lowest *X, Y, Z* coordinates in the axis-aligned grid, then proceeding with increasing coordinates along the *Z* axis for each pair of *(X,Y)* coordinates, and for each such pair, proceeding with increasing coordinates along the *Y* axis. In some embodiments, the data for each vertex may be stored in the buffer as the value of the density followed by the values of the SH coefficients.

For some embodiments, the "vertices" property in the "PlenoxelData" type is described using two properties named "density" and "SHcoeffs". The "density" property in this embodiment represents the index of an accessor referencing a buffer that contains the volume density values for all the voxels in the grid, arranged in the order described above. The "SHcoeffs" property represents the index of an accessor referencing a buffer that contains the SH coefficients for all the vertices in the grid, arranged in the same order.

### AJIF Description of a Plenoxel Avatar Model

Table 8 shows an extension of the specification of the the AJIF LOD data type that includes a new "PlenoxelData" property. This property is an instance of the "PlenoxelModel" data type. For some embodiments, the LOD AJIF data type describes an avatar at a given level of detail.

The AJIF "PlenoxelModel" type is identical to the MPEG-I SD- "PlenoxelModel" type described in Tables 4-7, except that the AJIF "PlenoxelModel" data type relies on the AJIF representation of data structures in place of the gITF-based representation, which uses accessors, bufferViews, and buffers. As described in the '214 application, data buffers in AJIF are referenced by "RawData" items that play the role of accessors in glTF and MPEG-I SD. Thus, in both the MPEG-I SD-based embodiment and in the AJIF embodiment of the avatar description, the data arrays are referenced as integer indices. However, these indices have different semantics. In a MPEG-I SD-based embodiment, the indices represent indices of accessors in the "accessors" array of the scene description. In an AJIF-based embodiment of the application, the indices represent indices of "RawData" items in the "data" list of the avatar description.

**Table 8.**

| **Name** | **Type** | **Description** | **Required** |
|---|---|---|---|
| name | string | LOD name | No |
| lod | integer | Indicates the level of detail. Lower values correspond to higher levels of detail. | No, default 0 |
| mesh | integer | References a node in the *"nodes"* collection | No |
| PlenoxelData | PlenoxelModel | Plenoxel representation of the avatar at the considered level of detail | No |
| skeletons | integer[1-*] | List of references to skeletons in the *"skeletons"* collection | No |
| controllers | integer[1-*] | List of references to controllers in the "controllers" collection | No |

### Example MPEG-I SD description

Code Listing 1 provides an example set of scene description data structures in MPEG-I SD format that describe a Plenoxel representation of an avatar for some embodiments. The described scene contains a single root node named "my_avatar" that represents the model of an avatar. Accordingly, the node is extended by the "MPEG_node_avatar" extension. The avatar node includes a "mesh" property, named "my_avatar_mesh" and referenced by index 0 in the "meshes" array. Besides the "type" and "mappings" properties specified in *Amendment 2 of MPEG-I SD,* the "MPEG_node_avatar" extension also includes a Plenoxel model of the avatar, represented by the "PlenoxelModel" property which, according to the application, is a "PlenoxelData" object as specified in Table 4.

The Plenoxel model is named "my_avatar_Plenoxel_model". The Plenoxel model holds an "avatarPose" property, which is an instance of the "CanonicalPose" type defined in the '036 application. It specifies the position and orientation of the avatar in the coordinate frame in which the Plenoxel voxel grid is referenced. The "PlenoxelModel" property further holds a "gridGeometry" property, composed as shown in Table 5 of a "box" and a "numCells" property. The "box" property is an instance of the "BoundingBox" type specified in Table 6. The "box" property is composed of properties "center" and "size".

Lastly, the "PlenoxelModel" property holds a "vertices" array of "PlenoxelData" instances encoding the features of the vertices in the Plenoxel grid. These features are encoded as a "density" property related to its opacity and a "SHcoeffs" property encoding the coefficients of the Spherical Harmonics representation of its viewpoint-dependent color. For clarity, the Plenoxel grid encoded in the example scene description is limited to 2 x 2 x 2 vertices, and the maximum order of the Spherical Harmonics basis decomposition is set to 0. Hence, the "SHcoeffs" property for a vertex is an array that contains a single (R, G, B) color triplet.

| |
|---|
| ``` { "scene": 0, "scenes": [ { "nodes": [0] } ], "meshes": [ { "name": "my_avatar_mesh", "primitives": [ { "attributes": { "POSITION": 0, "TEXCOORD_0": 1 }, "indices": 2, "mode": 4 } ] } ], "nodes": [ { "name": "my_avatar", "mesh": 0, ``` |
| ``` "extensions": { "MPEG_node_avatar": { "mappings": [], "type": "urn:my_avatar_type", "PlenoxelModel": { "name": "my_avatar_Plenoxel_model", "avatarPose": { "type": " mpeg:sd:avatar:pose:ixzy" }, "gridGeometry": { "box": { "center": [0.75, -1.15, 0.0], "size": [6.0, 3.5, 11.0] } "numCells": [2, 2, 2] }, "vertices": [ { "density": 0.0, "SHcoeffs": [0.67, 0.12, 0.35] }, { "density": 1.0, "SHcoeffs": [0.38, 0.26, -0.03] }, { "density": 0.0, "SHcoeffs": [0.11, -0.19, 0.46] }, { ``` |
| ``` "density": 0.0, "SHcoeffs": [0.48, 0.62, 0.27] { "density": 0.0, "SHcoeffs": [0.51, -0.39, -0.42] }, { "density": 1.0, "SHcoeffs": [0.36, 0.54, 0.15] }, { "density": 0.0, "SHcoeffs": [0.22, 0.07, 0.77] }, { "density": 0.0, "SHcoeffs": [0.08, -0.44, 0.81] } ] } } } } ], "extensionsUsed": [ "MPEG_node_avatar" ], "extensionsRequired": [ "MPEG_node_avatar" ], ``` |
| ``` "asset": { "version": ["2.0"] } } ``` |
| **Code Listing 1.** |

### Parsing of the "PlenoxelData" Property

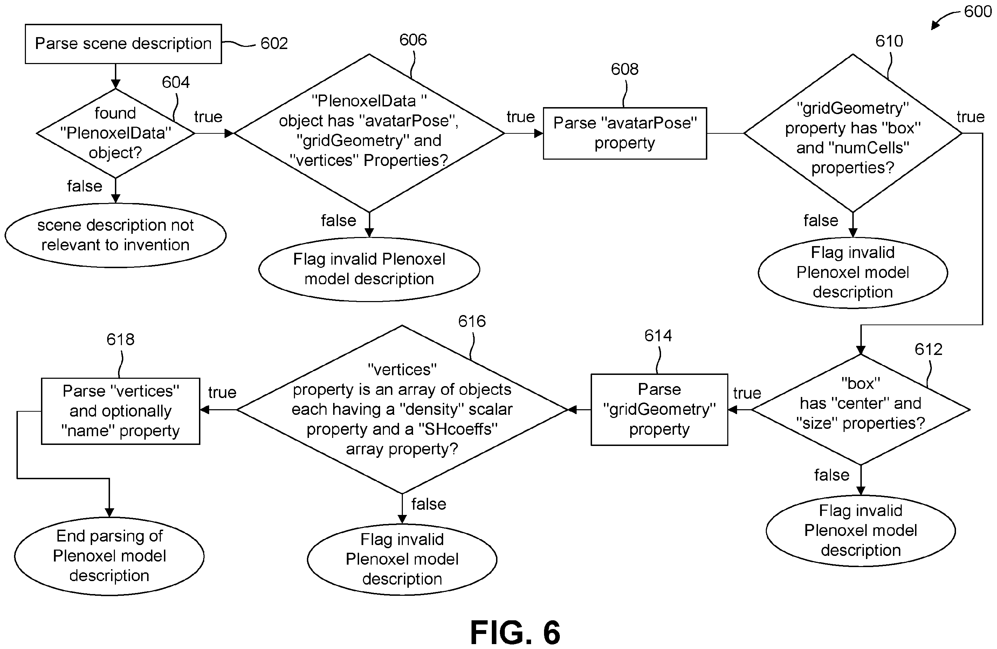

FIG. 6 is a flowchart illustrating an example process for parsing a "PlenoxelData" object according to some embodiments. Parsing a scene description containing a "PlenoxelData" object for some embodiments proceeds as shown in the process 600 of FIG. 6.

In step 602, the scene description is parsed.

In step 604, occurrences of "PlenoxelData" objects are detected in the scene description. If no such object is found, the process 600 exits because the scene description is not relevant to the application for some embodiments.

A check 606 is made to determine whether any "PlenoxelData" object is found that has "avatarPose", "gridGeometry", and "vertices" properties. If not all of these three properties are present, the description of the "PlenoxelData" object is flagged as invalid.

Otherwise, at step 608, the "avatarPose" property of the "PlenoxelData" object is parsed.

A check 610 is made to determine whether the object referenced by the "gridGeometry" property holds a "box" and a "numCells" property. If not, the description of the "PlenoxelData" object is flagged as invalid.

Otherwise, a check 612 is made to determine whether the object referenced by the "box" property detected at step 610 has "center" and "size" properties. If not, the description of the "PlenoxelData" object is flagged as invalid.

At step 614, the "gridGeometry" property is parsed.

A check 616 is made to determine whether the "vertices" property references an array of objects each holding a "density" scalar value and a "SHcoeffs" array of values. If not, the description of the "PlenoxelData" object is flagged as invalid.

Otherwise, at step 618, the "vertices" property of the "PlenoxelData" object detected at step 606 and its "name" property, if present, is parsed.

### Processing Model

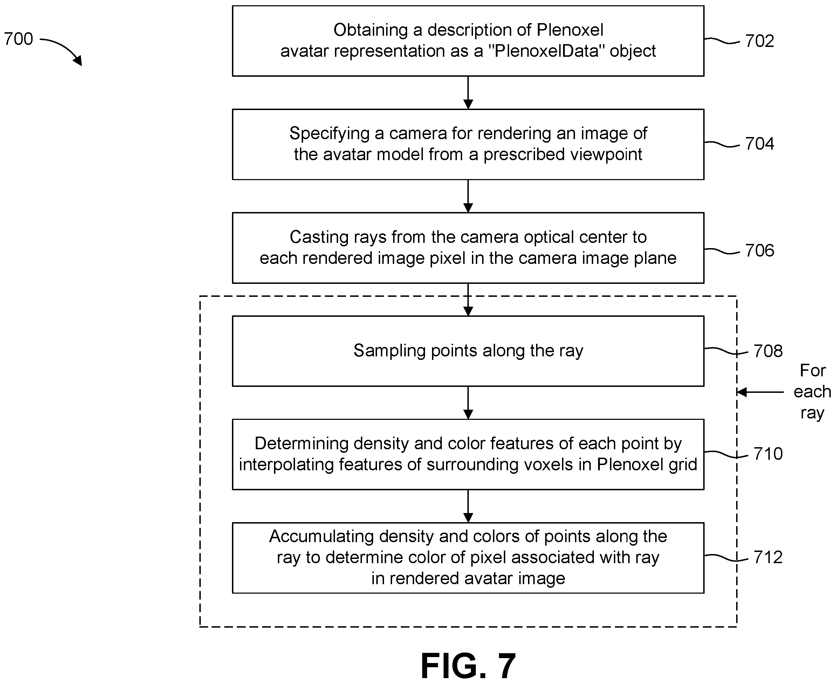

FIG. 7 is a flowchart illustrating an example process for obtaining an image of the avatar from a prescribed viewpoint according to some embodiments. FIG. 7 provides an example processing model for obtaining an image of the avatar from a prescribed viewpoint from the description of the Plenoxel avatar model encoded as described herein.

An example processing model 700 is illustrated in FIG. 7. FIG. 7 shows that the representation of Plenoxel data representing an avatar is obtained. As described in this application, a "PlenoxelData" object is encoded in a sender device and transmitted to a receiver device. The "PlenoxelData" may be used by the receiver device to generate images of the avatar rendered from a prescribed viewpoint. The processing model conforms to the image formation process shown in FIG. 5.

At step 702, the receiver device in charge of computing an image of the avatar receives a Plenoxel representation of the avatar encoded as a "PlenoxelData" object according to the application.

At step 704, the receiver device, which is in charge of computing an image of the avatar, specifies a virtual camera for rendering the image of the avatar. The position and orientation of this camera is determined as a function of the position and orientation of the avatar in the coordinate system of the Plenoxel grid, as specified by the "avatarPose" attribute of the "PlenoxelData" object received at step 702, in order to obtain a rendered image that has a prescribed viewpoint on the avatar. The intrinsic parameters of the camera lens, such as its focal length, are determined by the receiver device as a function of the requirements on the desired appearance of the avatar in the rendered image.

At step 706, the receiver device casts rays from the position of the optical center of the virtual camera determined at step 704 to each of the locations of the pixels in the camera image plane of the image to be rendered. These rays are referenced in the coordinate frame of the Plenoxel grid obtained from the description received at step 702.

At step 708, each ray cast at step 706 is sampled at locations determined by the receiver device. Each such location should lie within the bounding volume of the Plenoxel grid of voxels encoded in the description of the Plenoxel model obtained at step 702.

At step 710, the features describing the density and view-dependent color of each point sampled at step 708 of each ray cast at step 706 are computed by the receiver device. First, from the position of the sampled point in the Plenoxel grid of voxels, the application determines the cell of the 3D vertex grid in which the point is located. This cell is delimited by 8 vertices, as illustrated in FIG. 3. Second, the application determines the density and Spherical Harmonics (SH) coefficients for the sampled point by tri-linearly interpolating these values from the corresponding values of the 8 vertices of the enclosing cell.

At step 712, the densities and colors are accumulated for all the points along the ray according to a predetermined process described in *Fridovich-Keil.* This process is performed to determine the color of the pixel associated with the ray in the rendered image of the avatar. The color of each point sampled on the ray is computed as a function of: (1) the incident direction of the ray in the coordinate frame of the Plenoxel grid; and (2) the set of SH coefficients determined at step 710.

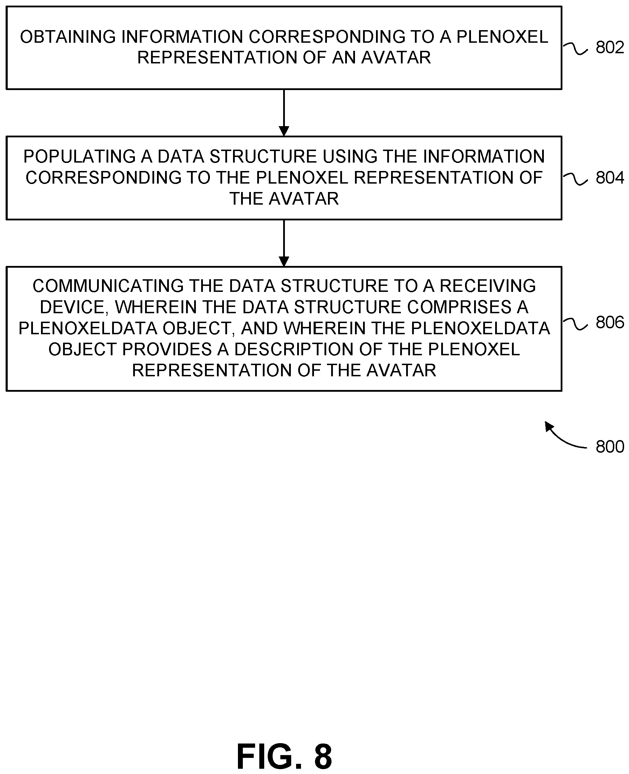

FIG. 8 is a flowchart illustrating an example process for communicating a Plenoxel representation of an avatar. For some embodiments, an example process 800 may include obtaining 802 information corresponding to a Plenoxel representation of an avatar. For some embodiments, the example process 800 may further include populating 804 a data structure using the information corresponding to the Plenoxel representation of the avatar. For some embodiments, the example process 800 may further include communicating 806 the data structure to a receiving device, wherein the data structure includes a PlenoxelData object, and wherein the PlenoxelData object provides a description of the Plenoxel representation of the avatar.

An example method in accordance with some embodiments may include: obtaining a Plenoxel representation of an avatar; and synthesizing an image of the avatar from a viewpoint using the Plenoxel representation, wherein obtaining the Plenoxel representation of the avatar includes obtaining a PlenoxelData object, and wherein the PlenoxelData object provides a description of the Plenoxel representation of the avatar.

Some embodiments of the example method may further include parsing the Plenoxel representation of the avatar.

For some embodiments of the example method, parsing the Plenoxel representation of the avatar includes: parsing the PlenoxelData object, wherein the Plenoxel representation includes the PlenoxelData object, and wherein the PlenoxelData object corresponds to the avatar; parsing an avatarPose property of the PlenoxelData object; parsing a gridGeometry property of the PlenoxelData object; and parsing a vertices property of the PlenoxelData object;

Some embodiments of the example method may further include populating a data structure using the Plenoxel representation of the avatar.

Some embodiments of the example method may further include determining the viewpoint of the avatar.

Some embodiments of the example method may further include specifying a camera for synthesizing the image of the avatar from the viewpoint.

Some embodiments of the example method may further include casting a plurality of rays from an optical center of the camera to each of a plurality of respective pixels of the image.

Some embodiments of the example method may further include performing a loop for each of the plurality of rays, wherein the loop includes: sampling points along a respective ray of the plurality of rays; determining density and color features of each point along the respective ray; and determining a color of a respective pixel associated with the respective ray.

For some embodiments of the example method, wherein determining density and color features of each point along the respective ray including interpolating features of surrounding vertices in a Plenoxel grid, and wherein the surrounding vertices surround a respective point of the points along the respective ray.

For some embodiments of the example method, determining the color of the respective pixel associated with the respective ray includes accumulating the density and the color features of the points along the respective ray;

For some embodiments of the example method, determining the color of the respective pixel associated with the respective ray includes performing a volume rendering process based on the density and the color features of the points along the respective ray.

For some embodiments of the example method, the color features of the points along the respective ray include spherical coefficients of the points along the respective ray.

For some embodiments of the example method, synthesizing the image includes: determining at least one a position, a scale, and an orientation of the avatar to be consistent with the 3D rendering of the virtual environment from the viewpoint; and synthesizing the image of the avatar based on at least one of the position, the scale, and the orientation of the avatar.

Some embodiments of the example method may further include compositing the image of the avatar on a three-dimensional (3D) rendering of a virtual environment from the viewpoint.

An example apparatus in accordance with some embodiments may include: a processor; and a memory storing instructions operative, when executed by the processor, to cause the apparatus to perform any of the methods listed above.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining information corresponding to a Plenoxel representation of an avatar; populating a data structure using the information corresponding to the Plenoxel representation of the avatar; and communicating the data structure to a receiving device, wherein the data structure includes a PlenoxelData object, and wherein the PlenoxelData object provides a description of the Plenoxel representation of the avatar.

Some embodiments of the example method may further include parsing the information corresponding to the Plenoxel representation of the avatar.

For some embodiments of the example method, the PlenoxelData object includes properties of the avatar.

For some embodiments of the example method, the PlenoxelData object includes pose data, grid geometry data, and vertices data of the avatar.

For some embodiments of the example method, populating the data structure includes populating the PlenoxelData object.

For some embodiments of the example method, populating the PlenoxelData object includes: populating an avatarPose property of the PlenoxelData object; populating a gridGeometry property of the PlenoxelData object; and populating a vertices property of the PlenoxelData object.

For some embodiments of the example method, the grid geometry data includes bounding box data, number of vertices data, and grid rotation data corresponding to the avatar.

For some embodiments of the example method, the bounding box data includes data indicating a center and a size of the bounding box data.

For some embodiments of the example method, the bounding box data includes data indicating a 3D bounding volume of the avatar.

For some embodiments of the example method, the grid rotation data indicates a 3D rotation used to define a 3D bounding volume of the avatar.

For some embodiments of the example method, the vertices data includes data indicating density and spherical harmonic coefficients associated with the avatar.

For some embodiments of the example method, the pose data indicates a Uniform Resource Name (URN) associated with a pose of the avatar.

For some embodiments of the example method, the data structure includes data mapping between child nodes of the avatar and avatar body parts.

For some embodiments of the example method, the data structure complies with an MPEG-I SD-based standard.

An example apparatus in accordance with some embodiments may include: a processor; and a memory storing instructions operative, when executed by the processor, to cause the apparatus to perform any of the methods listed above.

One or more embodiments provide a computer program including instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods include one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present application may refer to "determining" various pieces of information. Determining information may include one or more of, for example, estimating, calculating, predicting, or retrieving (e.g., from memory) the information.

The present application may refer to "accessing" various pieces of information. Accessing information may include one or more of, for example, receiving, retrieving (e.g., from memory), storing, moving, copying, calculating, determining, predicting, or estimating the information. Similarly, the present application may refer to "receiving" various pieces of information. Receiving information may include one or more of, for example, accessing or retrieving (e.g., from memory) the information.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present application or the following claims. Although features and elements are described herein in particular combinations, those of ordinary skill in the art will appreciate that such features or elements may be used alone or in any combination with the other features and elements. It is understood, therefore, that the overall teachings of the present application are not limited to the particular embodiments, implementations, and examples disclosed herein, but are intended to cover variations, modifications, and alternatives as defined by the appended claims and any and all equivalents thereof.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

Various numeric values may be used in the present application, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining information corresponding to a Plenoxel representation of an avatar;
populating a data structure using the information corresponding to the Plenoxel representation of the avatar; and
communicating the data structure to a receiving device,
wherein the data structure comprises a PlenoxelData object, and
wherein the PlenoxelData object provides a description of the Plenoxel representation of the avatar.

2. The method of claim 1, further comprising parsing the information corresponding to the Plenoxel representation of the avatar.

3. The method of any one of claims 1-2, wherein the PlenoxelData object comprises properties of the avatar.

4. The method of any one of claims 1-3, wherein the PlenoxelData object comprises pose data, grid geometry data, and vertices data of the avatar.

5. The method of any one of claims 1-4, wherein populating the data structure comprises populating the PlenoxelData object.

6. The method of claim 5, wherein populating the PlenoxelData object comprises:
populating an avatarPose property of the PlenoxelData object;
populating a gridGeometry property of the PlenoxelData object; and
populating a vertices property of the PlenoxelData object.

7. The method of any one of claims 4-6, wherein the grid geometry data comprises bounding box data, number of vertices data, and grid rotation data corresponding to the avatar.

8. The method of claim 7, wherein the bounding box data comprises data indicating a center and a size of the bounding box data.

9. The method of any one of claims 7-8, wherein the bounding box data comprises data indicating a 3D bounding volume of the avatar.

10. The method of claim 7, wherein the grid rotation data indicates a 3D rotation used to define a 3D bounding volume of the avatar.

11. The method of any one of claims 4-10, wherein the vertices data comprises data indicating density and spherical harmonic coefficients associated with the avatar.

12. The method of any one of claims 4-11, wherein the pose data indicates a Uniform Resource Name (URN) associated with a pose of the avatar.

13. The method of any one of claims 1-12, wherein the data structure comprises data mapping between child nodes of the avatar and avatar body parts.

14. The method of any one of claims 1-13, wherein the data structure complies with an MPEG-I SD-based standard.

15. An apparatus comprising:
a processor; and
a memory storing instructions operative, when executed by the processor, to cause the apparatus to perform the method of any one of claims 1 through 14.
